(19) Europäisches Patentamt / European Patent Office / Office européen des brevets

(11) **EP 4 527 193 A1**

(12) **EUROPEAN PATENT APPLICATION**

(43) Date of publication:
26.03.2025 Bulletin 2025/13

(21) Application number: 23306542.4

(22) Date of filing: 19.09.2023

(51) International Patent Classification (IPC):
*A01K 61/55* (2017.01)

(52) Cooperative Patent Classification (CPC):
A01K 61/54

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• Université de la Polynésie Française
98702 Faa'a - Tahiti (PF)
• Présidence
98713 Papeete - Tahiti (PF)
• New Zealand Forest Research Institute Limited
(Scion)
Rotorua 3046 (NZ)

(72) Inventors:
• GAERTNER MAZOUNI, Nabila
98702 Faa'a - Tahiti - Polynésie Française (FR)
• CRUSOT, Margaux
98702 Faa'a - Tahiti - Polynésie Française (FR)
• LO, Cédrik
98713 Papeete - Tahiti - Polynésie française (FR)
• RICHMOND, Tutea
98702 Faa'a - Tahiti - Polynésie Française (FR)
• LEGUEN, Marie-Joo
3046 Rotorua (NZ)
• WHITTON, Rob
3046 Rotorua (NZ)
• BARBIER, Maxime
3046 Rotorua (NZ)

(74) Representative: Icosa
83 avenue Denfert-Rochereau
75014 Paris (FR)

(54) **BIVALVE SPAT COLLECTOR**

(57) The present invention relates to a bivalve spat collector that comprises a collecting site configured for collecting said bivalve spat, said collector being made of a material that comprises at least two biodegradable polyesters, different from one another, and calcium carbonate. The collector preferably further comprises at least one interlocking element. The present invention further relates to a collector system comprising at least two collectors that each comprises at least one interlocking element, said collectors being successively connected by the interlocking element(s).

FIG. 1

EP 4 527 193 A1

# EP 4 527 193 A1

**Description**

## FIELD OF INVENTION

The present invention relates to a bivalve spat collector that comprises a collecting site configured for collecting said bivalve spat, said collector being made of a material that comprises at least two biodegradable polyesters, different from one another, and calcium carbonate. The collector preferably further comprises at least one interlocking element. The present invention further relates to a collector system comprising at least two collectors that each comprises at least one interlocking element, said collectors being successively connected by the interlocking element(s).

## BACKGROUND OF INVENTION

Plastic waste production is a global concern, in particular in insular environments where its management is often inadequate. For instance, in French Polynesia, many islands do not have any waste treatment centers, those being only on the most populated islands leading to improper management of plastic waste.

The farming of black-lipped pearl oysters (*Pinctada margaritifera*) in French Polynesia, and in particular the stage of natural spat collection, leads to significant plastic waste creation in the ocean. The settlement supports (called "collectors") used for collection are immersed during 6 to 24 months. They are composed of a black polypropylene (PP) shade-mesh strip threaded on a polyethylene rope (referred to as shade-mesh collectors). Said material is particularly fragile and brittle and leads to micro-plastic production. As conventional plastic degrades over several hundred years, these collectors become a source of plastic waste in pearl-growing areas, and in particular in Polynesian lagoons. Even if more solid conventional plastic collectors are used, plastic waste management is still required at the end and is often poorly performed, as mentioned- above.

Therefore, there is a real need to provide bivalve spat collectors comprising an alternative material to conventional plastic, said alternative material being able to biodegrade, in particular in the marine environment, and being less toxic, thus drastically reducing the pollution associated with the spat collection stage.

This aim is achieved with the bivalve spat collectors of the present invention, which is made of a biodegradable and less toxic material.

In addition, the Applicant has surprisingly found that a specific structure of the bivalve spat collectors of the present invention maximizes bivalve spat collection efficiency.

## SUMMARY

This invention thus relates to a bivalve spat collector comprising a collecting site configured for collecting said bivalve spat, the collector being made of a material that comprises:

- at least two biodegradable polyesters, different from one another; and
- calcium carbonate.

According to an advantageous aspect of the invention, the total content of the at least two biodegradable polyesters, different from one another, is greater than 70 % by weight; preferably greater than 90 % by weight; and more preferably ranges from 94 % to 98 % by weight relative to the total weight of the material.

According to an advantageous aspect of the invention, the at least two biodegradable polyesters, different from one another, are chosen from polybutylene adipate terephthalate (PBAT), polylactic acid (PLA), poly(ethylene succinate) (PES), polybutylene succinate (PBS), polycaprolactone (PCL), polydioxanone (PDO), polyglycolide (PGA), polyhydroxybutyrate (PHB), poly(3-hydroxybutyrate-co-3-hydroxyvalerate) (PHBV), poly(butylene succinate-co-butylene adipate) (PBSA), and mixtures thereof; and preferably from polybutylene adipate terephthalate, polylactic acid, polyhydroxybutyrate, poly(3-hydroxybutyrate-co-3-hydroxyvalerate, polybutylene succinate, poly(butylene succinate-co-butylene adipate), and mixtures thereof.

According to an advantageous aspect of the invention, one of the at least two biodegradable polyester is a biodegradable homopolyester and another of the at least two biodegradable polyester is a biodegradable copolyester. Preferably, the weight ratio between the total content of biodegradable copolyester and the total content of biodegradable homopolyester is greater than or equal to 0.2; more preferably ranges from 0.5 to 5; and even more preferably ranges from 0.8 to 2. More preferably, the material comprises one biodegradable homopolyester and one biodegradable copolyester. Even better, the biodegradable homopolyester is polylactic acid and the biodegradable copolyester is polybutylene adipate terephthalate.

According to an advantageous aspect of the invention, the total content of calcium carbonate ranges from greater than 0 % to 7 % by weight; preferably from 0.3 % to 5 % by weight; and more preferably from 0.5 % to 2 % by weight relative to the total weight of the material.

According to an advantageous aspect of the invention, the material further comprises at least one additive, different from the biodegradable polyesters and from calcium carbonate, chosen from biodegradable and non-toxic pigments, vegetal fibers, and mixtures thereof.

According to an advantageous aspect of the invention, at least part of the collector has a lightness lower than 20%; and preferably lower than 10%.

Indeed, several bivalve spat, such as the *P. margaritifera* spat, are highly photo-sensitive. The dark color of the collector attracts more photo-sensitive bivalve spat.

According to an advantageous aspect of the invention, the collecting site is at least partially rough.

The roughness allows a better hanging of the spat.

According to an advantageous aspect of the invention, the collecting site comprises at least one rough surface.

Indeed, the collecting site thus has a surface, preferably a continuous surface, which, compared to shade-mesh, is more rigid. This allows the spat to get a firmer grip on the rough surface and leads to a better protection against predation.

According to an advantageous aspect of the invention, the collecting site comprises a concave surface.

Preferably, the rough surface is on the concave surface.

Indeed, when the collector is placed in water so that the concave surface is opposite the surface of the water, the lightness on the rough surface is decreased. The photo-sensitive bivalve spat, such as *P. margaritifera* spat, are thus more attracted.

According to an advantageous aspect of the invention, the collecting site has a truncated conical shape.

Indeed, the inventor surprisingly found that the truncated conical shape increases the number of collected spat.

According to an advantageous aspect of the invention, the at least one rough surface comprises at least one protrusion, at least one recess, or a combination thereof.

According to an advantageous aspect of the invention, the collector further comprises at least one interlocking element.

Indeed, the interlocking element allows to easily attach two collectors together so that to increase the size of the collecting surface. Moreover, the interlocking element allows to space two collectors with a distance which is small enough to prevent the predation.

This invention also relates to a collector system comprising at least two collectors, each collector comprising at least one interlocking element, the collectors being successively connected by said interlocking element(s).

Advantageously, when the collectors of a collector system are placed in water so that the concave surfaces are opposite the surface of the water, each collector covers the underlying collector so that to imply a decay of the luminosity on the convex surfaces of the underlying collectors. Consequently, the photo-sensitive bivalve spat, such as *P. margaritifera* spat, are also attracted to hang on the convex surfaces therefore increasing the number of collected spat. This advantage is even more significant when the convex surface is also rough so as the concave surface.

## DEFINITIONS

In the present invention, the following terms have the following meanings:

**"3D printing"** refers to a process for manufacturing three-dimensional solid objects from a digital file.

**"Biodegradable";** when referring to a material (for instance, the material of the collector 100 of the present invention or a polyester), means that said material is able to decay naturally and without harming the environment.

**"Bivalve"** refers to a class of marine and freshwater molluscs that have bodies enclosed by a shell consisting of two hinged parts. The class includes the clams, oysters, cockles, mussels, scallops, and numerous other families that live in saltwater, as well as a number of families that live in freshwater.

**"Calcium carbonate"** is a chemical compound with the chemical formula $CaCO_3$.

**"Collecting surface"** refers to the surface or area onto which the bivalve spat are collected. In other words, the collecting surface is the area wherein the spat could settle down and hang in order to grow.

**"Comprising"** or **"comprise"** is to be construed in an open, inclusive sense, but not limited to.

**"Consisting of"** or **"consist"** is to be construed in a close, non-inclusive sense, limited to the features following this term.

**"Ester functional group"** refers to the functional group CO(O)R.

**"From X to Y"** refers to the range of values between X and Y, the limits X and Y being included in said range.

**"From greater than X to Y"** refers to the range of values between X and Y, the limit Y being included in said range whereas the limit X is not included in said range.

**"Non-toxic":** refers to a substance that is harmless to humans or animals.

**"Pigment":** refers to a coloring chemical that is mineral or organic. When the pigment is from natural origin, it means that it is derived from minerals, plants or animals. When the pigment is bio-based, it means that it is strictly derived from plants or animals.

**"Polyester"** refers to a polymer which contains at least one ester functional group in each repeat units.

**"Polymer"** refers to a large molecule formed by the multiple repetition of at least one repeat unit, said repeat units being covalently linked to one another. A polymer results from the polymerization of at least one monomeric species. **"Copolymer"** refers to a large molecule formed by the multiple repetition of at least two different repeat units, said repeat units being covalently linked to one another. A copolymer results from the polymerization of at least two different monomeric species. Copolymers can be alternating, periodic, statistical, random or block copolymers. **"Homopolymer"** refers to a large molecule formed by the multiple repetition of a single repeat unit, the identical repeat units being covalently linked to one another. A homopolymer results from the polymerization of a single monomeric species.

## BRIEF DESCRIPTION OF THE FIGURES

**Figure 1** shows the collecting site of a collector according to one embodiment.

**Figure 2** shows a collecting site having the form of a truncated conical shape.

**Figure 3** shows the collector system.

**Figure 4** displays the spat density of *Pinctada margaritifera* (number of spat per $cm^2$) in function of the type of collector (shade-mesh or the collector 100 of the present invention) after 6 and 13 months of collection. Error bars denote standard deviations.

**Figure 5** displays the D-larvae development success following leachate exposure from material-based collectors. Normal D-larvae rate after 48h exposure to leachates of the material of commonly used shade-mesh collectors (A) and the biomaterial of the collectors of the present invention (B) at four concentration 0 (control), 0.1, 10 and 100 g $L^{-1}$ and for two leaching duration (24h and 120h). Significant differences are represented by different letters ($P < 0.05$, Anova and Kruskal Wallis tests). Samples outside the box (outliers) are represented as a black dot.

**Figure 6** displays the chemicals shared among screened raw material and associated leachate of 24h and 120h. Venn diagram of the number of persistent organic pollutants and additives identified in the material and 24h (L24H) and 120h (L120H) leachates of shade-mesh (A) and of the biomaterial of the collectors of the present invention (B).

## DETAILED DESCRIPTION

### Bivalve spat collector 100

This invention relates to a collector 100 comprising a collecting site 10 configured for collecting bivalve spat, the collector 100 being made of a material that comprises:

- at least two biodegradable polyesters, different from one another; and
- calcium carbonate.

The Applicant has surprisingly evidenced that such collector 100, which is made of an alternative material to conventional plastic, said alternative material being able to biodegrade in the marine environment and being less toxic, leads to a drastically reduced pollution associated with the spat collection stage in bivalves farming.

The collector 100 of the invention may be used to collect spat of all kinds of bivalves but may be optimized for collecting spat of pearl oysters.

Material

*The at least two biodegradable polyesters, different from one another*

Advantageously, the at least two biodegradable polyesters, different from one another, are chosen from polybutylene adipate terephthalate, polylactic acid, poly(ethylene succinate), polybutylene succinate, polycaprolactone, polydioxanone, polyglycolide, polyhydroxybutyrate, poly(3-hydroxybutyrate-co-3-hydroxyvalerate), poly(butylene succinate-co-butylene adipate), and mixtures thereof; more preferably from polybutylene adipate terephthalate, polylactic acid, polyhydroxybutyrate, poly(3-hydroxybutyrate-co-3-hydroxyvalerate, polybutylene succinate, poly(butylene succinate-co-butylene adipate), and mixtures thereof; and even more preferably from polybutylene adipate terephthalate, polylactic acid, poly(butylene succinate-co-butylene adipate), and mixtures thereof.

Preferably, the total content of the at least two biodegradable polyesters, different from one another, is greater than 70 % by weight; more preferably greater than 90 % by weight; and even more preferably ranges from 94 % to 98 % by weight relative to the total weight of the material.

In one embodiment, one of the at least two biodegradable polyesters is a biodegradable homopolyester and another one of the at least two biodegradable polyesters is a biodegradable copolyester.

In the above-mentioned embodiment, the weight ratio between the total content of biodegradable copolyester and the total content of biodegradable homopolyester is preferably greater than or equal to 0.2; more preferably ranges from 0.5 to 5; and even more preferably ranges from 0.8 to 2.

Preferably, the material of the collector 100 comprises one biodegradable homopolyester and one biodegradable copolyester. More preferably, the biodegradable homopolyester is polylactic acid and the biodegradable copolyester is polybutylene adipate terephthalate.

*Calcium carbonate*

Preferably, the total content of calcium carbonate ranges from greater than 0 % to 7 % by weight; more preferably from 0.3 % to 5 % by weight; and even more preferably from 0.5 % to 2 % by weight relative to the total weight of the material.

Advantageously, the material of the collector 100 comprises bivalve shell powder as a source of calcium carbonate; preferably the bivalve shell powder is mother-of-pearl powder; and more preferably the mother-of-pearl powder is from the mother-of-pearl of a pearl oyster.

When the material of the collector 100 comprises bivalve shell powder as a source of calcium carbonate, the total content of said bivalve shell powder preferably ranges from greater than 0 % to 7 % by weight; more preferably from 0.3 % to 5 % by weight; and even more preferably from 0.5 % to 2 % by weight relative to the total weight of the material.

*At least one additive*

Advantageously, the material of the collector 100 further comprises at least one additive, different from the compounds previously described (i.e., the biodegradable polyesters and calcium carbonate), chosen from biodegradable and non-toxic pigments, vegetal fibers, and mixtures thereof.

The at least one biodegradable and non-toxic pigment, when it is present in the material of the collector 100, can be from natural or synthetic origin, and preferably from natural origin. When the at least one biodegradable and non-toxic pigment is from natural origin, it is preferably biobased.

Advantageously, the at least one biodegradable and non-toxic pigment, when it is present in the material of the collector 100, is chosen from activated charcoal, aniline black, graphite, carbon black, and mixtures thereof; preferably from activated charcoal, carbon black, and mixtures thereof; and more preferably the at least one biodegradable and non-toxic pigment is activated charcoal.

The total content of the at least one biodegradable and non-toxic pigment, when it is present in the material of the collector 100, preferably ranges from greater than 0 % to 10 % by weight; more preferably from 1 % to 8 % by weight; and even more preferably from 1.5 % to 6 % by weight relative to the total weight of the material.

Advantageously, the material of the collector 100 further comprises at least one vegetal fiber chosen from coir, banana fiber, *Pandanus* fiber, pineapple fiber, sugarcane fiber, bamboo fiber, and mixtures thereof; and preferably from coir, banana fiber, sugarcane fiber, and mixtures thereof.

The total content of the at least one vegetal fiber, when it is present in the material of the collector 100, preferably ranges from greater than 0 % to 20 % by weight; more preferably from 0.5 % to 15% by weight, even more preferably from 1 % to 8 % by weight; and better still from 1.5 % to 6 % by weight relative to the total weight of the material.

*Preferred material*

In one embodiment, the collector 100, which comprises a collecting site 10 configured for collecting bivalve spat, is made of a material that comprises:

- a biodegradable homopolyester and a biodegradable copolyester; preferably the biodegradable homopolyester is polylactic acid and the biodegradable copolyester is polybutylene adipate terephthalate;
- calcium carbonate;

wherein:

- the total content of the biodegradable homopolyester and of the biodegradable copolyester is preferably greater than 70 % by weight; more preferably greater than 90 % by weight; and even more preferably ranges from 94 % to 98 % by weight relative to the total weight of the material;
- the weight ratio between the total content of the biodegradable copolyester and the total content of the biodegradable homopolyester is preferably greater than or equal to 0.2; more preferably ranges from 0.5 to 5; and even more preferably ranges from 0.8 to 2;
- the total content of calcium carbonate preferably ranges from greater than 0 % to 7 % by weight; more preferably from 0.3 % to 5 % by weight; and even more preferably from 0.5 % to 2 % by weight relative to the total weight of the material.

In one preferred embodiment, the collector 100, which comprises a collecting site 10 configured for collecting bivalve spat, is made of a material that comprises:

- a biodegradable homopolyester and a biodegradable copolyester; preferably the biodegradable homopolyester is polylactic acid and the biodegradable copolyester is polybutylene adipate terephthalate;
- calcium carbonate;
- at least one biodegradable and non-toxic pigment preferably chosen from activated charcoal, aniline black, graphite, carbon black, and mixtures thereof; more preferably from activated charcoal, carbon black, and mixtures thereof; and even more preferably the at least one biodegradable and non-toxic pigment is activated charcoal;

wherein:

- the total content of the biodegradable homopolyester and of the biodegradable copolyester is preferably greater than 70 % by weight; more preferably greater than 90 % by weight; and even more preferably ranges from 94 % to 98 % by weight relative to the total weight of the material;
- the weight ratio between the total content of the biodegradable copolyester and the total content of the biodegradable homopolyester is preferably greater than or equal to 0.2; more preferably ranges from 0.5 to 5; and even more preferably ranges from 0.8 to 2;
- the total content of calcium carbonate preferably ranges from greater than 0 % to 7 % by weight; more preferably from 0.3 % to 5 % by weight; and even more preferably from 0.5 % to 2 % by weight relative to the total weight of the material;
- the total content of the at least one biodegradable and non-toxic pigment preferably ranges from greater than 0 % to 10 % by weight; more preferably from 1 % to 8 % by weight; and even more preferably from 1.5 % to 6 % by weight relative to the total weight of the material.

In one even preferred embodiment, the collector 100, which comprises a collecting site 10 configured for collecting bivalve spat, is made of a material that comprises:

- polybutylene adipate terephthalate and polylactic acid, the total content of polybutylene adipate terephthalate and of polylactic acid is preferably greater than 70 % by weight; more preferably greater than 90 % by weight; and even more preferably ranges from 94 % to 98 % by weight relative to the total weight of the material; the weight ratio between the total content of polybutylene adipate terephthalate and the total content of polylactic acid is preferably greater than or equal to 0.2; more preferably ranges from 0.5 to 5; and even more preferably ranges from 0.8 to 2;
- calcium carbonate, whose total content preferably ranges from greater than 0 % to 7 % by weight; more preferably from 0.3 % to 5 % by weight; and even more preferably from 0.5 % to 2 % by weight relative to the total weight of the material;

- activated charcoal, whose total content preferably ranges from greater than 0 % to 10 % by weight; more preferably from 1 % to 8 % by weight; and even more preferably from 1.5 % to 6 % by weight relative to the total weight of the material.

Structure

The collecting site 10 comprised in the collector 100 is preferably in the form of a continuous surface. Indeed, contrarily to shade-mesh or filamentous structure, the continuous surface provides solidity and rigidity to the collecting site 10. This allows the spat to get a firmer grip and leads to a better protection against predation.

The surface onto which the bivalve spat are collected is named in the present disclosure the collecting site. In other words, the collecting surface is the area wherein the spat could settle down and hang in order to grow. The collecting surface may thus correspond to part of the surface of the collecting site 10 or to the whole surface of the collecting site 10.

The collecting site 10 is at least partially rough or textured allowing a better hanging of the spat and thereby maximizing bivalve spat collection efficiency.

The rough surface may comprise at least one protrusion or at least one recess (groove) or the combination of at least one protrusion and at least one recess. Advantageously, the protrusions allow to reach a higher rigidity of the collecting site.

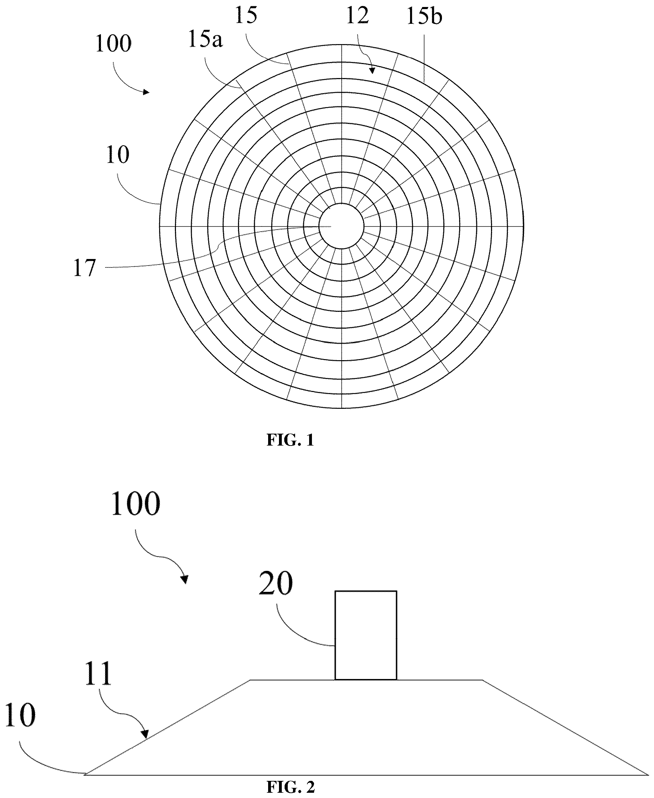

For example, as shown in **Figure 1,** the rough surface comprises a plurality of protrusions 15.

Advantageously, the weight of the collector 100 ranges from 0.005 kg to 1 kg; and preferably from 0.015 kg to 0.1 kg.

Advantageously, at least part of the collector 100 has a lightness lower than 20%, preferably lower than 10%. The lightness used in this description is measured according to the CIELAB color space defined by the International Commission on Illumination. The collector 100 is thus preferably dark such as dark grey or black but can have any dark color such as dark green or dark orange.

Preferably, the collecting site 10 has a lightness lower than 20%, even more preferably lower than 10%. Indeed, several bivalve spat, such as the *P. margaritifera* spat, are highly photo-sensitive. The dark color of the collector 100 attracts more spat.

In the preferred embodiment, the collecting site 10 has a concave surface 12. The collecting site 10 may also have a convex surface 11.

The rough surface is preferably at least on the concave surface 12. The rough surface may cover a part of the concave surface 12, the whole the concave surface 12, part of the concave surface 12 and part of the convex surface 11, the whole the concave surface 12 and part of the convex surface 11, or the whole the concave surface 12 and the whole of the convex surface 11. Indeed, when the collecting site is placed in water so that the concave surface 12 is opposite the surface of the water, the lightness from the sun received on the rough surface is low. The photo-sensitive bivalve spat are thus more attracted towards the concave surface 12 comprising the rough surface.

The collecting site 10 may have the form of a truncated conical shape as represented in **Figure 2.** The cone (conical shape) must be understood here as the general three-dimensional shape formed by a set of lines connecting a common point, the apex, to a base. The longitudinal axis of the conical shape links the apex to the center of the base. The base may have a circular surface, an elliptical surface, a rectangular surface (pyramidal cone) or any irregular surface.

The truncated conical shape thus has a concave surface 12 and a convex surface 11. The largest dimension of the base may range from 2 cm to 20 cm, preferably from 3 cm to 15 cm, even more preferably from 5 cm to 10 cm.

In **Figure 1,** the collecting site 10 has a circular base with a longitudinal axis perpendicular to the base. The longitudinal axis is thus the axis of symmetry. The largest dimension corresponds to the diameter of the base.

In the embodiment wherein the collecting site 10 has the form of a truncated conical shape, the collecting site 10 may comprise a hole 17 preferably centered on the apex of the cone. The largest dimension of the hole 17 may range from 1 cm to 5 cm, preferably from 1.5 cm to 4 cm, and more preferably from 2 cm to 3 cm. The hole 17 is advantageous for hanging the collecting site 10 below the water surface.

In this example of **Figure 1,** the protrusions 15 comprise a set of radial protrusions 15a and a set of axial protrusions 15b thereby allowing to increase the rigidity of the collecting site 10. The axial protrusions 15b may be a plurality of concentric circular protrusions of different diameters as in **Figure 1** or a single spiral protrusion preferably centered on the apex of the conical shape.

## Collector system 200

The present invention further relates to a collector system 200.

The collector 100 may further comprise at least one interlocking element 20. The interlocking element 20 allows to easily attach two collectors 100 together so that to increase the size of the collecting area (the sum of the surface or area of the collecting sites 10) thereby forming the collector system 200. Preferably, the interlocking element 20 has an elongated shape, preferably a cylindrical shape. The interlocking element 20 is preferably disposed at the center of the collecting site 10.

The spat could also settle down and hang on the surface of the interlocking element 20 order to grow surface. The interlocking element 20 may thus be part of the collecting surface. The interlocking element 20 may thus comprise the same physical characteristics as the collecting site 10 in order to increase the efficiency of the bivalve collection, i.e., a roughness and/or a low lightness. In particular, the interlocking element 20 may comprise the same material as the collector 100.

The collector system 200 mays comprise from 2 to 100 collectors 100, preferably from 30 to 50 collectors 100.

Advantageously, when the collectors of a collector system are placed in water so that the concave surfaces are opposite the surface of the water, each collector covers the underlying collector so that to imply a decay of the luminosity on the convex surfaces 11 of the underlying collectors. Consequently, the photo-sensitive bivalve spat, such as *P. margaritifera* spat, are also attracted to hang on the convex surfaces 11 therefore increasing the number of collected spat. This advantage is even more significant when the convex surface 11 is also rough so as the concave surface.

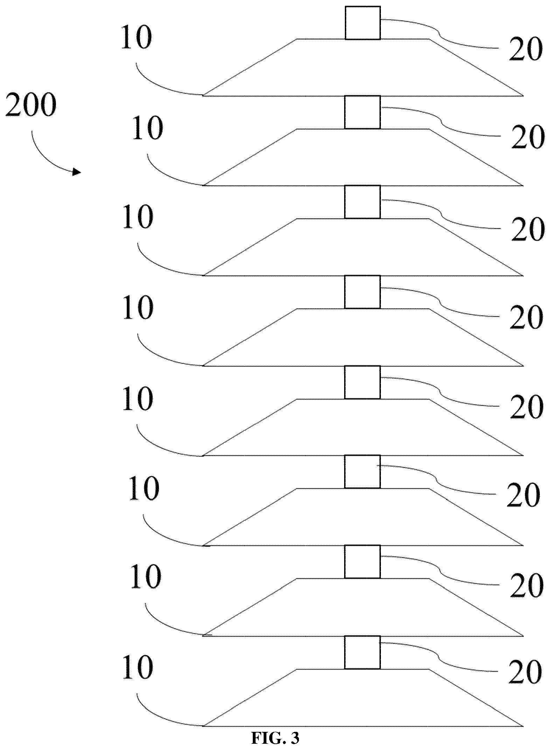

As explained above, in the embodiment wherein the collecting site 10 has the form of a truncated conical shape as in **Figure 1,** the collecting site 10 may comprise a hole 17 preferably centered on the apex of the cone. The interlocking element 20 may have the form of a cylinder centered on the hole 17 and extending along the longitudinal axis, one of the extremities of the interlocking element 20 being disposed on the collecting site, preferably on the convex surface 11. This advantageously allows to let the maximum of the concave surface 12 free of obstacle since the concave surface 12 is preferably optimized to increase the bivalve spat collection. Therefore, when connecting (attaching) two collectors 100 together, the extremity of the interlocking element 20 not disposed on the convex surface 11 of one collector 100 interlocks the hole 17 of the other collector 100. The collectors 10 are thus successively connected by the interlocking element 20 as represented in **Figure 3.**

The interlocking element 20 may be a hollow structure and the collector 10 may comprise an opening wherein the extremity of the interlocking element 20 is disposed. This advantageously allow to insert an additional support through the opening and the interlocking element 20 of the connected collectors 10. The additional support may be a rope or an elongated solid element such as a tube.

The interlocking element 20 also allows to space two collectors 100 with a distance which is small enough to prevent the predation. The interlocking element 20 may thus have a length ranging from 0.5 cm to 10 cm, preferably from 1.5 cm to 5 cm, even more preferably from 2 cm to 4 cm. Indeed, the distance between two collectors 100 could be large enough to allow the growing of the spat but could also be small enough to avoid predators such as fishes to reach the collecting site 10.

The collector 100 may be manufactured by any known techniques such as molding or 3D printing. The interlocking element 20 may be reversibly attached to the colleting site 10 for example by clamping or screwing, or may be fixed to the colleting site 10, for example by gluing or by manufacturing the interlocking element 20 together with the colleting site 10.

### EXAMPLES

The present invention is further illustrated by the following examples.

### Example 1: Assessment of spat collection efficiency

### Materials and Methods

The collection efficiency of collectors 100 of the present invention and of commonly used shade-mesh collectors was assessed and compared.

To do so, an *in situ* experiment was performed over a period of 13 months.

Eighty collector systems 200 of the present invention, each comprising thirty collectors 100, and eighty shade-mesh collectors were alternatively hanged on a main line immersed at 6 m depth during the whole experiment. After 6 months (T6), half of the devices were retrieved whereas the rest was recovered after 13 months (T13). The collection surface was 0.75 m$^2$ for collectors 100 of the present invention and 1.5 m$^2$ for shade-mesh collectors.

The collectors 100 of the present invention were made of a material that comprises:

- 48 % by weight, relative to the total weight of the material, of polybutylene adipate terephthalate;
- 48 % by weight, relative to the total weight of the material, of polylactic acid;
- 1 % by weight, relative to the total weight of the material, of pearl oyster mother-of-pearl powder;
- 3 % by weight, relative to the total weight of the material, of activated charcoal.

The collectors 100 have the same structure as in figures 1 and 2. Each collector 100 has a truncated conical shape comprising a convex surface 11 and a concave surface 12. The concave surface 12 comprises 20 radial protrusions 15 and 10 concentric axial protrusions 15 covering the whole concave surface 122. Each collector 100 is black.

After 6 months (T6) or 13 months (T13), *Pinctada margaritifera* spat were removed of each collector, counted and weighed. Size and weight of spat was also measured individually.

The calculation of spat density was performed according to the protocol described in Crusot et al., Aquae. Reports 20, 2021, 100751.

### Results

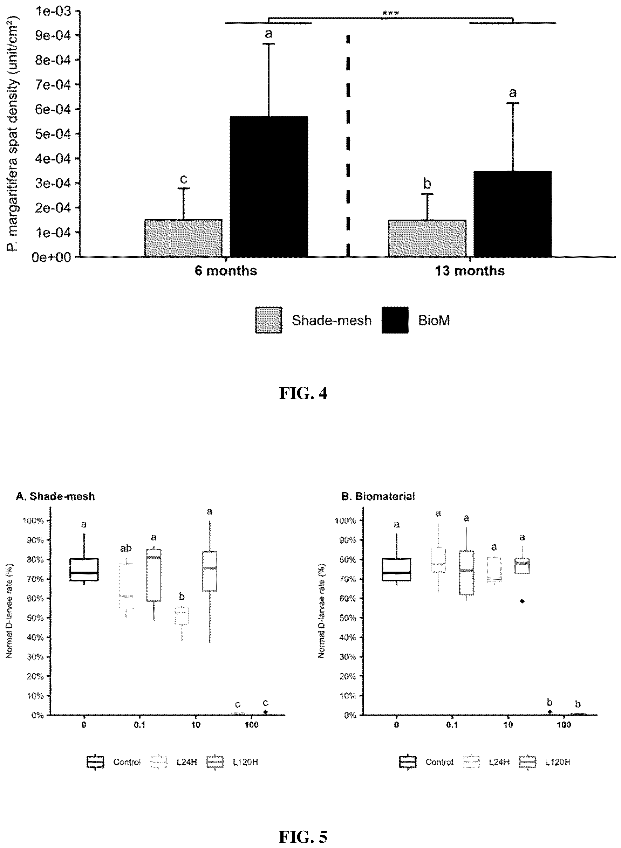

Regardless of the duration of the experiment, collectors 100 of the present invention collected significantly more *Pinctada margaritifera* spat than shade-mesh collectors with respective density of $5.68 \pm 2.97 \times 10^{-4}$ and $1.50 \pm 1.28 \times 10^{-4}$ spat.cm$^{-2}$ (P <0.0001, Post hoc exact permutation test) after 6 months and $3.46 \pm 2.78 \times 10^{-4}$ and $1.49 \pm 1.07 \times 10^{-4}$ spat.cm$^{-2}$ after 13 months (P <0.05, Post hoc exact permutation test) (see **Figure 4**). Thus, collectors 100 of the present invention collected up to 3.8 more *Pinctada margaritifera* spat than commonly used shade-mesh collectors.

Therefore, it is demonstrated that the specific structure of the bivalve spat collector 100 of the present invention maximizes oysters spat collection efficiency, thereby leading to the use of fewer collectors 100 in the water to obtain the same output as obtained with commonly used shade-mesh collectors.

### Example 2: Assessment of chemical toxicity

### Materials and Methods

The chemical toxicity of the material (abbreviated SM) of commonly used shade-mesh collectors and of the biomaterial (called BP) of the collectors 100 of the present invention on the embryonic development of *Pinctada margaritifera* was assessed.

The material BP comprises:

- 48 % by weight, relative to the total weight of the material, of polybutylene adipate terephthalate;
- 48 % by weight, relative to the total weight of the material, of polylactic acid;
- 1 % by weight, relative to the total weight of the material, of pearl oyster mother-of-pearl powder;
- 3 % by weight, relative to the total weight of the material, of activated charcoal.

The collectors 100 have the same structure as in figures 1 and 2. Each collector 100 has a truncated conical shape comprising a convex surface 11 and a concave surface 12. The concave surface 12 comprises 20 radial protrusions 15 and 10 concentric axial protrusions 15 covering the whole concave surface 122. Each collector 100 is black.

Embryos were exposed during 48 hours to four concentrations (0, 0.1, 10 and 100 g/L) of leachates produced from the above-mentioned materials.

*Leachate preparation*

Leachate preparation from raw materials was performed according to the EN 124757 - 4:2002 E standard (CEN, 2002). Raw materials were first cut into small pieces of less than 1 cm$^2$ using clean stainless-steel scissors, in order to maximize the contact surface between the material and the seawater. No pre-washing of the materials was done in order to study the first release of chemicals compounds into seawater. Two leaching times were chosen: 24 hours, as recommended by the standard, and 120 hours in order to test the chemical release of materials over a longer leaching period according to Garden et al., Water Res. 179, 2020, 11. Leachates were prepared by adding 100 g of small pieces to 1 L of natural seawater (100 g L$^{-1}$) in a 2.5 L brown glass bottle. This bottle was used because of the important volume taken by the 100 g of SM pieces (> 1 L) instead of the 1 L bottle proposed in the standard. The seawater used was pumped directly from Vairao lagoon (17°48'23"S, 149°2'41'W, Tahiti, FP) treated with UV, filtered mechanically at 1 μm and with a 0.22 μm Millipore filter (Whatman™). Leaching was performed under artificial light at 28°C, on a magnetic agitator at 300 rotations per minute (rpm). In the case of SM, since cut pieces occupied a large volume of the 2.5 L bottle, magnetic agitation was limited despite the water covering all pieces. Therefore, 2 to 3 manuals stirring per day was realized for each leachate, to optimize the exchanges between the materials and the leaching water. Moreover, solvent controls (SC) were also produced by adding 1 L of seawater (UV, filtered 1 μm and 0.22 μm) in a 2.5 L glass bottle with the same 120h stirring. Then, 10 treatments were applied according to leaching times (24h and 120h) and the type of materials: material of commonly used shade-mesh collectors (SM-L24H and SM-L120H), material of the collectors 100 of the present invention (BP-L24H and BP-L120H), and SC. After the leaching period, material pieces were separated from leachates by filtration in order to test only the chemical toxicity of leachates without any confounding physical effects. SC followed the same procedure. Filtration was performed on a GF/C glass fiber filter (1.22 μm of porosity, Whatman™), and Millipore filter (0.22 μm of porosity, Whatman™) using glass vacuum filtration units previously autoclaved. For each leachate, 200 ml were sampled for further chemical analyzes. Leachates were stored in opaque glass bottles in the dark at -20°C. In addition, water parameters (temperature, pH, salinity) of SC were measured prior and after leaching of 24h and 120h to ensure that leaching conditions did not influence the seawater parameters. All glassware were washed, rinsed with acetone and ethanol and either burned during 4 h at 450°C or autoclaved prior the experiment (Quiniou et al., Bio-indicateur de la toxicité potentielle de milieux aqueux : bio-essai, 2005, p.23; ASTM, E724-21, Standard guide for Conducting Static Short-Term Chronic Toxicity Tests Starting with Embryos of Four Species of Saltwater Bivalve Molluscs, 2021).

*Broodstock conditioning and spawning*

Adult *Pinctada margaritifera* individuals (aged 6-7 years) were collected from Vairao lagoon (Ifremer marine concession N° 8120 / MLD: 17°48'26.0"S, 149°18' 14.4"W, Tahiti, FP), then cleaned and used as broodstock. They were conditioned during 6-7 weeks prior to the spawning with food *ad-libitum* and optimal condition in order to promote the maturation of reproductive organs. The spawning was induced by a cleaning of the oyster shells. To do so, shells were dried up and cleaned with a brush, then individuals were re-bathed in seawater after 1h (~28°C). Both males and females responded to the cleaning induction, with female spawning only after reconditioning in normal conditions (~28°C, algal feedings). Thus, one male and one female were used for monoparental fertilization. Fertilized eggs were concentrated in a 50 ml glass beaker at 7500 eggs.ml$^{-1}$. The fertilization rate was in accordance with the standard (>90%) reaching 95.7%.

*Toxicity test*

The toxicity test was performed according to ASTM E724-98 standard (2021) and consisted in a factorial design with two factors: treatment (i.e. SM-L24H, SM-L120H, BP-L24H, BP-L120H), and leachate concentration of 100 (pure leachates), 10 and 0.1 g L$^{-1}$. These concentrations were chosen based on the results of Garden et al. (Water Res. 179, 2020, 11) and in accordance with recent literature implying similar tests on bivalves as well (Capolupo et al., Water Res. 169, 2020, 115270; Tallec et al., J. Hazard. Mater. 2022, 427). The dilution seawater used was pumped before the test from Vairao lagoon (17°48'23"S,149°2'41'W, Tahiti, FP) treated with UV, filtered mechanically at 1 μm and with a 0.22 μm Millipore filter (Whatman™). A total of 12 leachate conditions was tested and each condition was conducted in five replicates. Since dilution seawater was not the same as the one used for leaching, it was also necessary to test the leaching solvent control to verify its safety (ASTM, 2021). Thus, five controls were made with dilution seawater (C), and ten others with 10 ml of SC. A total of 75 samples were therefore assessed during toxicity test and conducted in 25 ml glass pillboxes previously burned at 450°C with a final volume of 10 ml.

According to ASTM (2021), glass containers were randomly distributed to minimize the effect of seeding time on the results. Less than 4h after fertilization (ASTM, 2021), glass containers were seeded with fertilized oocytes, at a final concentration of 30 eggs.ml$^{-1}$ marking the beginning of the exposure period of toxicity test. During the whole test, glass containers were put in the dark without food supply at 28°C. Eggs concentration was verified by counting developing eggs (30.2 ± 1.7 eggs ml$^{-1}$; ASTM, 2021) at the beginning, at the middle and at the end of the seeding (N = 3 per time) under an optical microscope (ZEISS Axiostar). Embryo monitoring was performed after 48h exposure by homogenizing the medium, extracting 4 ml and fixing embryos with 8% buffered formalin (16,7 μL ml$^{-1}$; Quiniou et al., Bio-indicateur de la toxicité potentielle de milieux aqueux : bio-essai, 2005, p.23). The embryo-larval development of *P. margaritifera* was also observed under an optical microscope (ZEISS Axiostar) at magnification x200 for the total count and x400 for population characterization. Different embryonic stages were observed (*i.e.* trocophore, abnormal, normal and dead D-larvae) in order to determine the rate of alive and normally developed D-larvae.

Calculations were made according to the standard (ASTM, 2021), such as :

$$(1)\ ND = 100\ \times\ B/N$$

Where ND is the alive and normally developed D-larvae rate (named normal D-larvae rate), B is the number of alive normal larvae at the end of the test and N is defined as the theoretical number of alive normal D-larvae supposed to be find in the 4 ml sample (N = 121). Dead larvae were discriminated from D-stage larvae by their empty shells (Garden et al., Water Res. 179, 2020, 11). In addition, toxicity test parameters (temperature, pH, salinity) were followed in one replicate mimicking each condition tested with the same oocytes concentrations, at the beginning (T0) and at the end (T48H) of the exposure period. DO was also checked and was above 90% for the control at T48H.

*Chemical screening*

Raw materials were screened for additives and persistent organic pollutants (APOs). First, material ($1.57 \pm 0.14$ g) chemical compounds were extracted in analytical grade methanol (final volume = 10 ml) with magnetic stirring (200 rpm) in the dark for 16h. The extract was then diluted to a ratio of 1/100 in water to achieve a final volume of 100 ml, and 10 ml of an internal calibration solution was added. This calibration solution contained a mix of naphtalene $d_8$, biphenyl $d_{10}$, phenanthrene $d_{10}$, benzo[a]anthracene $d_{12}$, pyrene $d_{10}$, benzo[a]pyrene $d_{12}$; benzo[ghi]perylene $d_{12}$, brominated diphenyl ether 77 (BDE77), Di(2-ethylexyl) phthalate (DEHP) $d_4$, ethylparathion $d_{10}$, 4 nonylphenol $d_8$, tretrachloronaphtalene, atrazine $d_5$. Subsequently, an SBSE-TD-GC-MS/MS analysis, as described by Lacroix et al. (J. Chromatogr. A 1349, 2014, 1-10). was conducted to identify and quantify APOs. A sorptive stir bar coated of polydimethylsiloxane (PDMS) was introduced in each solution and stirred at 750 rpm for 16h of extraction in the dark at room temperature. Stirbars were then retrieved, dried and placed in a desorption tube. The samples were analyzed with a gas chromatography (GC) coupled with detection by tandem mass spectrometry (MS/MS). The methodology used for these analyses was similar to Garden et al., Water Res. 179, 2020, 11. Briefly, the gas chromatograph used was an HP 7890N equipped with a Combipal MPS2 multifunction injection system (Gerstel, Mülheim an der Ruhr, Germany), which allowed for the automated introduction of stir bars into the system. The interface temperature was set at 300°C. Thermal desorption was performed at 280°C for 6 minutes, and the samples were cryofocused in the cooling injection system (CIS, Gerstel) at -10°C before being heated to 300°C at a rate of 12°C/s and injected into a RXi 5-ms GC column (Restek, Bellefonte, USA) with dimensions of 30m x 0.25mm (internal diameter) x 0.25$\mu$m (film thickness). The GC temperature program consisted of initial heating to 70°C for 0.5 minutes, followed by an increase to 150°C at a rate of 20°C/min, and finally an increase to 300°C at a rate of 7°C/min, maintained for 5 minutes. The GC was coupled to an Agilent 7000 Triple Quadrupole tandem mass spectrometry detector (Agilent Technologies, Little Falls, USA), and helium was used as the carrier gas at a constant flow rate of 1 ml min$^{-1}$. A total of 21 PAHs, 14 polychlorinated biphenyls (PCBs), 7 polybrominated diphenyl ethers (PBDEs), 29 pesticides, 6 phthalates and 4 APs were targeted and quantified (N=81).

Regarding the chemical analyses of leachates, the same SBSE-TD-GC-MS/MS analysis was performed on leachates in order to gather information on the presence of APOs.

*Statistical analyses*

Statistical analyses and graphs were performed with R and Rstudio softwares v4.2.2. All data were expressed as rate (mean $\pm$ standard deviation) and followed an arcsin square root transformation. Each material was treated independently to follow its own toxicity. The normality (Shapiro-Wilk test) and homoscedasticity (Levene test) of the model residuals were tested prior to analyses. When model residuals were normal ($P > 0.01$) and homogeneous ($P > 0.05$) a two-way Anova testing the effect of concentration (0, 0.1, 10, 100 g L$^{-1}$) and leaching duration was performed followed by a mean comparison with Tukey's post-hoc test with a false discovery rate (FDR) P-value adjustment (Jafari and Ansari-Pour, 2019). Otherwise, a two-way nonparametric Scheirer Ray Hare test (testing interaction) or Kruskal-Wallis (KW) test was performed coupled to rcompanion's package post hoc exact permutation test (PHPT) with the same P-value adjustment (Mangiafico, 2015. An R Companion for the Handbook of Biological Statistics). The significance level was set at $P < 0.05$. Considering no difference between the solvent controls group and dilution seawater group, replicates were pooled together as a global control condition (N=15) for further analysis. In addition, regarding chemical analysis data, statistical significance of differences could not be carried out as only N = 2 sample of each (materials or leachates) were analyzed. Thus, data were compared based on the max of these N = 2 values as we wanted to assess the highest toxicity possible of these materials. Furthermore, values were adjusted in function of the amount of chemicals found in SC.

**Results**

*Leachate parameters during the embryo-toxicity test*

Temperature during the embryo-toxicity test was constantly maintained at $26.9 \pm 0.6$ °C, salinity being around $35.6 \pm 0.2$ psu. Regarding pH, it was of $8.8 \pm 0.1$ for control at T0 and of $7.5 \pm 0.04$ at T48H, as shown in **Table 1** below. The pH for the concentrations of 0.1 and 10 g L$^{-1}$ were in the same range, regardless of the material and leaching duration, with respectively a pH of $8.27 \pm 0.3$ and $8.5 \pm 0.5$ at T0 and of $7.6 \pm 0.1$ and $7.5 \pm 0.1$ at T48H. However, regarding the concentration of 100 g L$^{-1}$ at T0, SM-L120H differed slightly with a pH decrease of around 8.1 at T0 compared to the controls. At T48H, SM-L120H still differed in the same range.

**Table 1:** pH measurements in leachates 100 g L$^{-1}$ at the beginning (T0) and at the end (T48H) of the exposure. For control leachates, a mean ($\pm$ standard error) of control dilution water and the solvent controls is provided.

| Leachates | T0 | T48H |
|---|---|---|
| Control | 8.8 $\pm$ 0.1 | 7.5 $\pm$ 0.04 |
| SM-L24H | 8.9 | 7.3 |
| SM-L120H | 8.1 | 6.7 |
| BP-L24H | 8.6 | 7.6 |
| BP-L120H | 8.9 | 7.5 |

*Normal D-larvae yield*

As shown in **Figure 5,** the control group presented an ND of 75.4 $\pm$ 8.09% which is considered as a valid value for conducting the toxicity test according to the standard (> 70%). After 48h exposure, a significant toxicity of leachates 100 g L$^{-1}$ was observed compared to the control (P < 0.0001), regardless of the material and leaching duration. SM leachates significantly reduced ND rate depending on leaching duration when diluted at 10 g L$^{-1}$. SM-L24H reached 49.8 $\pm$ 8.38% (P = 0.0052, Tukey), whereas SM-L120H did not differ from control (P = 0.7668, Tukey). No toxicity on ND rate was observed for both 24h and 120h BP leachates at 10 g L$^{-1}$ (P > 0.05, Tukey), as well as at 0.1 g L$^{-1}$ regardless of leachate treatments.

*Chemical analyses*

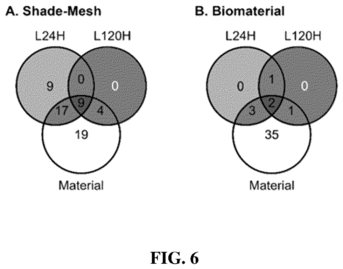

Considering the raw materials, as shown in **Figure 6,** 49 APOs were identified for SM out of 81 total number of chemical compounds, while 41 chemicals were identified for BP. Regarding SM, 5 phthalates, 2-3 APs, 20 -21 PAHs, 9-12 pesticides, 10-11 PCBs and 0-1 PBDE were measured. BP differed slightly from SM with 6 PCBs, the other quantity of chemicals remaining in the same range.

In contrast, as shown in **Table 2** below, concentrations of each chemical differed for PAHs, pesticides, phthalates and APs. Indeed, concentrations measured in SM were all higher than BP.

**Table 2:** Concentrations of the type of additives and persistants organics pollutants found in the materials (ng L$^{-1}$) and in the leachates ($\mu$g L$^{-1}$).

| | $\Sigma$ Phtalates | $\Sigma$ Alkylphenols | $\Sigma$ PAHs | $\Sigma$ Pesticides | $\Sigma$ PCBs | $\Sigma$ PBDEs | $\Sigma$ total |
|---|---|---|---|---|---|---|---|
| **Material ($\mu$g L$^{-1}$)** | | | | | | | |
| SM | 25.8 | 4.05 | 3.10 | 0.196 | 0.013 | 0.003 | 33.2 |
| BP | 4.09 | 1.70 | 0.100 | 0.014 | 0.002 | - | 5.90 |
| **Leachates (ng L$^{-1}$)** | | | | | | | |
| SM-L24H | 409 | 147 | 38.7 | 136 | 15.0 | 9.29 | 754 |
| SM-L120H | 985 | 149 | 15.1 | 292 | - | - | 1442 |
| BP-L24H | 670 | - | - | 11.5 | - | 1.37 | 683 |
| BP-L120H | 750 | - | - | 1.84 | - | 1.85 | 754 |

In addition, as shown in **Table 2,** less APOs and lower concentrations were found in leachates compared to raw materials regardless of the leaching duration. Phthalates, pesticides and APs were found in every leachates, except for the APs in BP. In addition, some compounds found in leachates were not present in the material. For example, no PBDE was identified in BP material whereas one was identified in both leachates. No PAHs were found in BP leachates.

Accordingly, concentrations of APOs measured in leachates differed depending on materials and leaching duration for a same material. 120H leachates presented higher concentrations of APOs than 24h leachates (see **Table 2**). The lowest chemical concentrations were measured in BP leachates. Considering single APOs, SM-L24H was the most concentrated in PAHs, PCBs and PBDEs. Concerning pesticides, the highest concentrations were also found in SM leachates with 134.7 and 292.4 ng L$^{-1}$ in L24H and L120H, respectively, mostly attributed to Acetochlore, the remaining compounds presenting concentrations lower than 2 ng L$^{-1}$ (see **Table 2).** Every leachates showed a toxicity at 100 g L$^{-1}$ while demonstrating important phthalates concentrations.

Nevertheless, BP leachates when diluted at 10 g L$^{-1}$ did not reveal a toxicity on *P. margaritifera* embryo-larval development, unlike SM, demonstrating BP higher safety. This could be explained by the generally lower number and concentrations (up to ten-fold lower) of APOs found in the material and its leachates compared to the others. SM leachates demonstrated a toxicity at 10 g L$^{-1}$. This concentration has already been demonstrated to impair embryo-larval development in *P. margaritifera* (Garden et al., Water Res. 179, 2020, 11) and *C. gigas* (Tallec et al., J. Hazard. Mater. 2022, 427) after respective exposure to leachates produced from plastic aquaculture gears. However, in our case the observed toxicity at this concentration was dependent of leaching duration as only SM-L24H showed toxicity. In contrast, SM-L24H presented lower concentration in APOs than SM-L120H, which did not demonstrate toxicity at 10 g L$^{-1}$. However, this 24h-leachate also presented the highest number of APOs identified (N= 34) including every type of chemicals studied (Phthalates, APs, PAHs, Pesticides, PBDEs, PCBs). This implies that some compounds desorbed during the 24h leaching disappeared after 120h leaching. PP is a plastic that can desorb and adsorb chemical compounds (Teuten et al., Philos. Trans. R. Soc. B Biol. Sci. 364, 2009, 2027-2045), thus SM may have first released chemical compounds during the first 24 h of leaching and may have re-adsorbed certain compounds during the rest of the leaching duration to reach 120H duration. In addition, some of the chemicals can be volatile, heat- and/or photo-labile, so even if the experiment was designed to minimize these risks, it could still have contributed to the disappearance of the chemicals (Garden et al., Water Res. 179, 2020, 11; Gunaalan et al., Water Res. 184, 2020, 116170; Zhang et al., Sci. Total Environ. 771, 2021, 145418). Therefore, SM-L24H toxicity would be more likely due to the cumulative effects of the contaminants as discussed previously (Liu et al., Ecotoxicology 18, 2009, 293-303; Teuten et al., Philos. Trans. R. Soc. B Biol. Sci. 364, 2009, 2027-2045; Garden et al., Water Res. 179, 2020, 11).

Therefore, it is demonstrated that the material of the collectors 100 of the present invention is less toxic than the material of commonly used shade-mesh collectors.

**Claims**

1. A collector (100) comprising a collecting site (10) configured for collecting bivalve spat, the collector (100) being made of a material that comprises:

   - at least two biodegradable polyesters, different from one another; and
   - calcium carbonate.

2. The collector (100) according to claim **1,** wherein the total content of the at least two biodegradable polyesters, different from one another, is greater than 70 % by weight; preferably greater than 90 % by weight; and more preferably ranges from 94 % to 98 % by weight relative to the total weight of the material.

3. The collector (100) according to claim **1** or claim **2,** wherein the at least two biodegradable polyesters, different from one another, are chosen from polybutylene adipate terephthalate, polylactic acid, poly(ethylene succinate), polybutylene succinate, polycaprolactone, polydioxanone, polyglycolide, polyhydroxybutyrate, poly(3-hydroxybutyrate-co-3-hydroxyvalerate), poly(butylene succinate-co-butylene adipate), and mixtures thereof; and preferably from polybutylene adipate terephthalate, polylactic acid, polyhydroxybutyrate, poly(3-hydroxybutyrate-co-3-hydroxyvalerate, polybutylene succinate, poly(butylene succinate-co-butylene adipate), and mixtures thereof.

4. The collector (100) according to any one of the preceding claims, wherein one of the at least two biodegradable polyester is a biodegradable homopolyester and another of the at least two biodegradable polyester is a biodegradable copolyester, and preferably the weight ratio between the total content of biodegradable copolyester and the total content of biodegradable homopolyester is greater than or equal to 0.2; more preferably ranges from 0.5 to 5; and even more preferably ranges from 0.8 to 2.

5. The collector (100) according to claim **4,** wherein the material comprises one biodegradable homopolyester and one biodegradable copolyester, and preferably the biodegradable homopolyester is polylactic acid and the biodegradable copolyester is polybutylene adipate terephthalate.

6. The collector (100) according to any one of the preceding claims, wherein the total content of calcium carbonate ranges from greater than 0 % to 7 % by weight; preferably from 0.3 % to 5 % by weight; and more preferably from 0.5 % to 2 % by weight relative to the total weight of the material.

7. The collector (100) according to any one of the preceding claims, wherein the material further comprises at least one additive, different from the biodegradable polyesters and from calcium carbonate, chosen from biodegradable and non-toxic pigments, vegetal fibers, and mixtures thereof.

8. The collector (100) according to any one of the preceding claims, wherein at least part of it has a lightness that is lower than 20%; and preferably lower than 10%.

9. The collector (100) according to any one of the preceding claims, wherein the collecting site (10) comprises at least one rough surface; and preferably said at least one rough surface comprises at least one protrusion, at least one recess, or a combination thereof.

10. The collector (100) according to any one of the preceding claims, wherein the collecting site (10) comprises a concave surface (12).

11. The collector (100) according to claim 10, wherein the rough surface is at least on the concave surface (12).

12. The collector (100) according to any one of the preceding claims, wherein the collecting site (10) has a truncated conical shape.

13. The collector (100) according to any one of the preceding claims, wherein it further comprises at least one interlocking element (20).

14. A collector system (200) comprising at least two collectors (100) according to claim **13,** the collectors (100) being successively connected by the interlocking element(s) (20).

100
15  12  15b
15a
10
17

**FIG. 1**

100
20
11
10

**FIG. 2**

200

10    20
10    20
10    20
10    20
10    20
10    20
10    20
10    20

**FIG. 3**

**FIG. 4**

**FIG. 5**

**A. Shade-Mesh**

L24H    L120H

9   0   0

17  9  4

19

Material

**B. Biomaterial**

L24H    L120H

0   1   0

3  2  1

35

Material

**FIG. 6**

Europäisches
Patentamt

European
Patent Office

Office européen
des brevets

**EUROPEAN SEARCH REPORT**

Application Number

**EP 23 30 6542**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/012670 A1 (BIOGRADE 999 PTY LTD [AU]; SCHEIRS JOHN [AU]) 9 February 2006 (2006-02-09) | 1-7,9, 13,14 | INV. A01K61/55 |
| Y | * abstract; claims 1-35; figures 1-3 * * page 1, line 3 - page 25, line 5 * ----- | 8,10-12 | |
| Y,D | CRUSOT M. ET AL: "Assessment of an alternative Pinctada margaritifera spat collector in French Polynesia", AQUACULTURE REPORTS, vol. 20, 1 July 2021 (2021-07-01), page 100751, XP093129184, NL ISSN: 2352-5134, DOI: 10.1016/j.aqrep.2021.100751 * the whole document * ----- | 8,10-12 | |
| A | FRIEDMAN KIM J. ET AL: "Availability of wild spat of the blacklip pearl oyster, Pinctada margaritifera, from `open' reef systems in Solomon Islands", AQUACULTURE, vol. 167, no. 3-4, 13 November 2018 (2018-11-13), pages 283-299, XP093129174, Amsterdam, NL ISSN: 0044-8486, DOI: 10.1016/S0044-8486(98)00286-5 * the whole document * ----- | 1-14 | |

TECHNICAL FIELDS SEARCHED (IPC)

A01K

-/--

The present search report has been drawn up for all claims

| Place of search | Date of completion of the search | Examiner |
|---|---|---|
| The Hague | 8 February 2024 | Rojo Galindo, Ángel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 23 30 6542**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARANTZAMENDI LEIRE ET AL: "Circular and lower impact mussel and seaweed aquaculture by a shift towards bio-based ropes", REVIEWS IN AQUACULTURE, vol. 15, no. 3, 28 March 2023 (2023-03-28), pages 1010-1019, XP093128679, Hoboken, USA ISSN: 1753-5123, DOI: 10.1111/raq.12816 * the whole document * | 1-14 | |
| A | AUDRÉZET FRANÇOIS ET AL: "Eco-Plastics in the Sea: Succession of Micro- and Macro-Fouling on a Biodegradable Polymer Augmented With Oyster Shell", FRONTIERS IN MARINE SCIENCE, vol. 9, 22 June 2022 (2022-06-22), XP093128523, ISSN: 2296-7745, DOI: 10.3389/fmars.2022.891183 * the whole document * | 1-14 | |
| A | CN 108 184 730 A (HANSHOU XINSEN FORESTRY TECH DEVELOPMENT CO LTD) 22 June 2018 (2018-06-22) * abstract; claims 1-5; figures 1,2 * * paragraphs [0001] - [0043] * | 1-14 | TECHNICAL FIELDS SEARCHED (IPC) |

The present search report has been drawn up for all claims

| Place of search | Date of completion of the search | Examiner |
|---|---|---|
| The Hague | 8 February 2024 | Rojo Galindo, Ángel |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.........................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 30 6542

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | Publication date | Patent family member(s) | Publication date |
|---|---|---|---|
| WO 2006012670 A1 | 09-02-2006 | NONE | |
| CN 108184730 A | 22-06-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CRUSOT et al.** *Aquae. Reports*, 2021, vol. 20, 100751
- **GARDEN et al.** *Water Res*, 2020, vol. 179, 11
- **QUINIOU et al.** *Bio-indicateur de la toxicité potentielle de milieux aqueux : bio-essai*, 2005, 23
- Standard guide for Conducting Static Short-Term Chronic Toxicity Tests Starting with Embryos of Four Species of Saltwater Bivalve Molluscs. *ASTM*, 2021, E724-21
- **CAPOLUPO et al.** *Water Res.*, 2020, vol. 169, 115270

- **TALLEC et al.** *J. Hazard. Mater*, 2022, 427
- **GARDEN et al.** *Water Res.*, 2020, vol. 179, 11
- **LACROIX et al.** *J. Chromatogr. A*, 2014, vol. 1349, 1-10
- **TEUTEN et al.** *Philos. Trans. R. Soc. B Biol. Sci.*, 2009, vol. 364, 2027-2045
- **GUNAALAN et al.** *Water Res.*, 2020, vol. 184, 116170
- **ZHANG et al.** *Sci. Total Environ*, 2021, vol. 771, 145418
- **LIU et al.** *Ecotoxicology*, 2009, vol. 18, 293-303